# EUROPEAN PATENT APPLICATION

(11) **EP 2 857 450 A1**
(43) Date of publication of application: **08.04.2015**
(21) Application number: 14186774.7
(22) Date of filing: 29.09.2014
(51) Int. Cl.: C08L 25/06, C08L 51/04, C08L 71/12

(54) **THERMOPLASTIC RESIN COMPOSITION AND MOLDED ARTICLE INCLUDING THE SAME**

(30) Priority: 01.10.2013 KR 20130117402
(71) Applicant: Samsung SDI Co., Ltd., Yongin-si, Gyeonggi-do (KR)
(72) Inventor: Lee, Jo Won, Gyeonggi-do (KR); Park, Dong Min, Gyeonggi-do (KR); Shin, Seung Shik, Gyeonggi-do (KR); Chin, Kyuong Sik, Gyeonggi-do (KR)
(74) Representative: Kreller-Schober, Maria

(57) **Abstract**

Disclosed herein is a thermoplastic resin composition, which includes: a base resin including a polyarylene ether resin and an aromatic vinyl polymer; a flame retardant; and an impact modifier, wherein the impact modifier is a rubber-modified vinyl graft copolymer in which an unsaturated monomer including 95 wt% to 99 wt% of an aromatic vinyl compound and 1 wt% to 5 wt% of a vinyl cyanide compound is grafted to a rubbery polymer; the base resin and the flame retardant form a continuous phase; and the impact modifier forms a dispersed phase. The thermoplastic resin composition has excellent properties in terms of impact resistance, flame retardancy, and balance therebetween.

## Description

The present invention relates to a thermoplastic resin composition and a molded article including the same. More particularly, the present invention relates to a thermoplastic resin composition which includes a polyarylene ether resin and an aromatic vinyl polymer as a base resin and has excellent properties in terms of impact resistance, flame retardancy and balance therebetween, and a molded article including the same.

A polyphenylene ether (PPE or polyphenylene oxide) resin exhibits excellent heat resistance, mechanical strength, dimensional stability upon processing, and the like. However, there is a drawback in that it is difficult to process the polyphenylene ether resin alone. Thus, the polyphenylene ether resin is blended with an aromatic vinyl polymer, such as a polystyrene resin and the like, which exhibits excellent compatibility, and thus is used for interior and exterior materials of electronic products, and the like.

Although the aromatic vinyl polymer exhibits excellent processability and mechanical properties, the aromatic vinyl polymer is prone to combustion and thus exhibits poor resistance to fire. Thus, when the polyphenylene ether resin is blended with a styrene resin, a flame retardant may be added. US Patents No. 3,639,506, No. 3,883,613 and the like disclose use of polyphenylene ether resins together with a styrene resin and a flame retardant such as aromatic phosphoric acid esters and the like.

Moreover, when the aromatic vinyl polymer is blended with the polyphenylene ether resin, an overall resin composition can be deteriorated in impact strength. To overcome such drawbacks, an impact modifier may be added together with the flame retardant when the aromatic vinyl polymer is blended with the polyphenylene ether resin. However, increase in amount of the impact modifier, such as a rubber-modified graft resin including g-ABS, inorganic fillers, and the like, can cause deterioration in flame retardancy of the overall resin composition.

Therefore, there is a need for a resin composition which has excellent flame retardancy, impact strength, and balance therebetween even when the resin composition includes all of the polyphenylene ether resin, the aromatic vinyl polymer, the flame retardant, and the impact modifier.

Thus, it is the object of the present invention to overcome disadvantages and to provide a thermoplastic resin composition which has excellent flame retardancy, impact strength and balance therebetween and includes an impact modifier exhibiting excellent dispersibility, and a molded article including the same.

This object has been achieved by the provision of a thermoplastic resin composition. The thermoplastic resin composition includes: a base resin including a polyarylene ether resin and an aromatic vinyl polymer; a flame retardant; and an impact modifier, wherein the impact modifier is a rubber-modified vinyl graft copolymer in which an unsaturated monomer including 95% by weight (wt%) to 99 wt% of an aromatic vinyl compound and 1 wt% to 5 wt% of a vinyl cyanide compound is grafted to a rubbery polymer; the base resin and the flame retardant form a continuous phase; and the impact modifier forms a dispersed phase.

In one embodiment, the base resin may include 30 wt% to 70 wt% of the polyarylene ether resin and 30 wt% to 70 wt% of the aromatic vinyl polymer.

In one embodiment, the flame retardant may be present in an amount of 5 parts by weight to 30 parts by weight, and the impact modifier may be present in an amount of 12 parts by weight to 18 parts by weight, based on 100 parts by weight of the base resin.

In one embodiment, the polyarylene ether resin may be a polymer including a repeat unit represented by Formula 1: 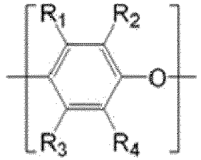 wherein R₁, R₂, R₃ and R₄ are each independently a hydrogen atom, a halogen atom, a C₁ to C₆ alkyl group, or a C₆ to C₁₂ aryl group.

In one embodiment, the aromatic vinyl polymer may include at least one of polystyrene, poly(α-methylstyrene), poly(β-methylstyrene), and polyvinyl naphthalene.

In one embodiment, the polyarylene ether resin may have a weight average molecular weight from 10,000 g/mol to 200,000 g/mol, and the aromatic vinyl polymer may have a weight average molecular weight from 20,000 g/mol to 500,000 g/mol.

In one embodiment, the thermoplastic resin composition may have an Izod impact strength from 7 kgf·cm/cm to 20 kgf·cm/cm, as measured on an 1/8" thick specimen in accordance with ASTM D638.

In one embodiment, the thermoplastic resin composition may have a flame retardancy level of V0 or higher, as measured on an 2.5 mm thick specimen according to the UL-94 vertical flammability test method.

Another embodiment of the present invention relates to a molded article formed of the thermoplastic resin composition as set forth above.
Fig. 1 is a transmission electron microscope (TEM) image of a specimen prepared in Example 1.
Fig. 2 is a TEM image of a specimen prepared in Comparative Example 1.
Fig. 3 is a TEM image of a specimen prepared in Comparative Example 2.

Hereinafter, embodiments of the present invention will be described in detail.

In accordance with one embodiment of the present invention, a thermoplastic resin composition includes: a base resin including a polyarylene ether resin and an aromatic vinyl polymer; a flame retardant; and an impact modifier, wherein the base resin and the flame retardant form a continuous phase, and the impact modifier forms a dispersed phase.

According to the present invention, the polyarylene ether resin may include, for example, a polymer including a repeating unit represented by Formula 1: 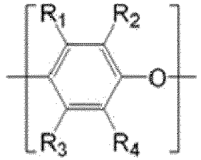 wherein R₁, R₂, R₃ and R₄ are each independently a hydrogen atom, a halogen atom, a C₁ to C₆ alkyl group, or a C₆ to C₁₂ aryl group.

Examples of the polyarylene ether resin may include poly(1,4-phenylene ether), poly(1,3-phenylene ether), poly(1,2-phenylene ether), poly(2-methyl-1,4-phenylene ether), poly(3-methyl-1,4-phenylene ether), poly(2-methyl-1,3-phenylene ether), poly(4-methyl-1,3-phenylene ether), poly(5-methyl-1,3-phenylene ether), poly(6-methyl-1,3-phenylene ether), poly(3-methyl-1,2-phenylene ether), poly(4-methyl-1,2-phenylene ether), poly(5-methyl-1,2-phenylene ether), poly(6-methyl-1,2-phenylene ether), poly(2,4-dimethyl-1,4-phenylene ether), poly(2,6-dimethyl-1,4-phenylene ether), poly(2,6-diethyl-1,4-phenylene ether), poly(2,6-dipropyl-1,4-phenylene ether), poly(2-methyl-6-ethyl-1,4-phenylene ether), poly(2-methyl-6-propyl-1,4-phenylene ether), poly(2-ethyl-6-propyl-1,4-phenylene ether), poly(2,6-diphenyl-1,4-phenylene ether), a copolymer of poly(2,6-dimethyl-1,4-phenylene ether) and poly(2,3,6-trimethyl-1,4-phenylene ether), and a copolymer of poly(2,6-dimethyl-1,4-phenylene ether) and poly(2,3,5-triethyl-1,4-phenylene ether), without being limited thereto. Specifically, the polyarylene ether resin may be poly(1,4-phenylene ether), poly(2,4-dimethyl-1,4-phenylene ether), and the like.

The polyarylene ether resin may have a weight average molecular weight (Mw) from 10,000 g/mol to 200,000 g/mol, for example, from 15,000 g/mol to 50,000 g/mol, as measured by gel permeation chromatography (GPC). In addition, the polyarylene ether resin may have an intrinsic viscosity (IV) from 10 dL/g to 100 dL/g, for example, from 30 dL/g to 50 dL/g, as measured at 25°C using an Ubbelohde viscometer after the polyarylene ether resin is dissolved in a sulfuric acid solution (98%). Within these ranges of weight average molecular weight and intrinsic viscosity, the impact modifier can be easily dispersed and the resin composition can have excellent flame retardancy, impact strength and balance therebetween.

In one embodiment, the polyarylene ether resin may be present in an amount of 30 wt% to 70 wt%, for example, 40 wt% to 60 wt% in the base resin. Within this range, the impact modifier can be easily dispersed and the resin composition can have excellent flame retardancy, impact strength and balance therebetween.

According to the present invention, the aromatic vinyl polymer may be a polymer of an aromatic vinyl monomer. Examples of the aromatic vinyl monomer may include styrene, α-methylstyrene, β-methylstyrene, p-methylstyrene, p-t-butylstyrene, ethylstyrene, vinylxylene, monochlorostyrene, dichlorostyrene, dibromostyrene, and vinyl naphthalene, without being limited thereto. Specifically, the aromatic vinyl monomer may be styrene.

Examples of the aromatic vinyl polymer may include polystyrene (PS), poly(α-methylstyrene), poly(β-methylstyrene), and polyvinyl naphthalene, without being limited thereto. These may be used alone or in combination thereof. Specifically, the aromatic vinyl polymer may be polystyrene.

Methods of preparing the aromatic vinyl polymer are well known to those of ordinary skill in the art, and the aromatic vinyl polymer is commercially available. For example, the aromatic vinyl polymer may be polymerized by thermal polymerization without an initiator, or may be polymerized in the presence of an initiator. The initiator may include peroxide initiators such as benzoyl peroxide, t-butyl hydroperoxide, acetyl peroxide, cumene hydroperoxide and the like; and azo initiators such as azobisisobutyronitrile, without being limited thereto.

The aromatic vinyl polymer may be prepared by bulk polymerization, suspension polymerization, emulsion polymerization, or combination thereof. Preferably, the aromatic vinyl polymer is prepared by bulk polymerization.

The aromatic vinyl polymer may have a weight average molecular weight from 20,000 g/mol to 500,000 g/mol, for example, from 30,000 g/mol to 300,000 g/mol, as measured by GPC. In addition, the aromatic vinyl polymer may have an intrinsic viscosity (IV) from 5 dL/g to 100 dL/g, for example, from 10 dL/g to 50 dL/g, as measured at 25°C using an Ubbelohde viscometer after the polyarylene ether resin is dissolved in sulfuric acid (98%). Within these ranges of weight average molecular weight and intrinsic viscosity, the impact modifier can be easily dispersed and the resin composition can have excellent flame retardancy, impact strength and balance therebetween.

In one embodiment, the aromatic vinyl polymer may be present in an amount of 30 wt% to 70 wt%, for example, 40 wt% to 60 wt% in the base resin. Within this range, the impact modifier can be easily dispersed and the resin composition can have excellent flame retardancy, impact strength and balance therebetween.

According to the present invention, the flame retardant may include a conventional flame retardant used in flame retardant thermoplastic resin compositions. For example, the flame retardant may include a phosphorus flame retardant such as red phosphorus, phosphates, phosphonates, phosphinates, phosphine oxides, phosphazenes, metallic salts thereof, and the like. The flame retardant may be a compound or a polymer, and may be a liquid. In addition, the flame retardants may be used alone or in combination thereof.

In one embodiment, the phosphorus retardant may include a compound represented by Formula 2: 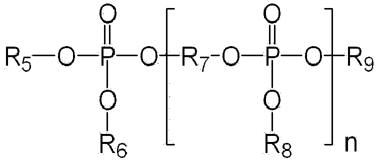 wherein R₅, R₆, R₈ and R₉ are each independently a substituted or unsubstituted C6 to C20 aryl group; R₇ is a derivative (moiety excluding a hydroxyl group) of a dialcohol of resorcinol, hydroquinone, bisphenol-A, or bisphenol-S; and n is an integer from 0 to 10. Here, the substituent may be a C₁ to C₁₀ alkyl group and the like.

When n is 0 in Formula 2, examples of the compound may include triphenyl phosphate, tricresyl phosphate, cresyl diphenyl phosphate, trixylyl phosphate, tri(2,4,6-trimethylphenyl) phosphate, tri(2,4-di-tert-butylphenyl) phosphate, tri(2,6-di-tert-butylphenyl)phosphate, and the like. In addition, when n is 1 in Formula 2, examples of the compound may include resorcinol bis(diphenyl phosphate), hydroquinone bis(diphenyl phosphate), bisphenol-A bis(diphenyl phosphate), resorcinol bis(2,6-di-tert-butylphenyl phosphate), hydroquinone bis(2,6-dimethylphenyl phosphate), and the like. When n is 2 or more in Formula 2, the compound may be present in the form of an oligomer.

In one embodiment, the flame retardant may be present in an amount of 5 parts by weight to 30 parts by weight, for example, 10 parts by weight to 20 parts by weight, based on 100 parts by weight of the base resin. Within this range, the resin composition can exhibit improved flame retardancy without deterioration of other properties.

According to the present invention, the impact modifier is dispersed as a spherical discontinuous phase (dispersed phase) in a continuous phase including the base resin and the flame retardant. The impact modifier may be a rubber-modified vinyl graft copolymer having a core-shell structure, in which an unsaturated monomer including 95 wt% to 99 wt% of an aromatic vinyl compound and 1 wt% to 5 wt% of a vinyl cyanide compound is grafted to a rubbery polymer.

Examples of the rubbery polymer may include diene rubbers, such as polybutadiene, poly(styrene-butadiene), poly(acrylonitrile-butadiene), and the like; saturated rubbers obtained by adding hydrogen to the diene rubbers; isoprene rubbers; acrylic rubbers such as polybutyl acrylate and the like; ethylenepropylene-diene monomer (EPDM), and the like. For example, the rubbery polymer may be a diene rubber, specifically a butadiene rubber.

In one embodiment, the rubbery polymer may be present in an amount of 5 wt% to 65 wt%, for example, 10 wt% to 60 wt%, based on the total weight of the rubber-modified vinyl graft copolymer. Within this range, the resin composition can exhibit excellent impact strength. In addition, the rubbery polymer (rubbery particles) may have an average (Z-average) particle size from 0.05 µm to 6 µm, for example, from 0.15 µm to 4 µm, specifically from 0.25 µm to 3.5 µm. Within this range, the resin composition can exhibit excellent impact strength and appearance.

The aromatic vinyl compound may be an aromatic vinyl compound capable of being grafted to the rubbery copolymer. Examples of the aromatic vinyl compound capable of being grafted to the rubbery copolymer may include styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and mixtures thereof, without being limited thereto. Specifically, the aromatic vinyl compound may be styrene.

The aromatic vinyl compound may be present in an amount of 95 wt% to 99 wt%, for example, 96 wt% to 98 wt%, in the total unsaturated monomer. If the amount of the aromatic vinyl compound is less than 95 wt%, there is a concern of deterioration in impact strength, flame retardancy and the like of the resin composition due to deterioration in dispersibility of the impact modifier, and if the amount of the aromatic vinyl compound is greater than 99 wt%, there is a concern of poor colorability of the resin composition.

The vinyl cyanide compound is a monomer copolymerizable with the aromatic vinyl compound. Examples of the monomer copolymerizable with the aromatic vinyl compound may include acrylonitrile, methacrylonitrile, and ethacrylonitrile, without being limited thereto. These may be used alone or in combination thereof.

The vinyl cyanide compound may be present in an amount of 1 wt% to 5 wt%, for example, 2 wt% to 4 wt% in the total unsaturated monomer. If the amount of the vinyl cyanide compound is less than 1 wt%, there is a concern that the resin composition suffers from peeling or milky marks upon injection molding due to insufficient binding strength of the vinyl cyanide compound to the resin, and if the amount of the vinyl cyanide compound is greater than 5 wt%, there is a concern of deterioration in impact strength, flame retardancy and the like of the resin composition due to deterioration in dispersibility of the impact modifier.

In one embodiment, the unsaturated monomer may be present in an amount of 35 wt% to 95 wt%, for example, 40 wt% to 90 wt%, based on the total weight of the rubber-modified vinyl graft copolymer. Within this range, the resin composition can exhibit excellent impact strength.

Examples of the rubber-modified vinyl graft copolymer may include a copolymer (g-ABS) in which a styrene monomer corresponding to the aromatic vinyl compound and an acrylonitrile monomer corresponding to the vinyl cyanide compound are grafted to a core butadiene rubbery polymer to form a shell, without being limited thereto.

In one embodiment, the impact modifier may be present in an amount of 12 parts by weight to 18 parts by weight, for example, 14 parts by weight to 16 parts by weight, based on 100 parts by weight of the base resin. Within this range, the impact modifier can be easily dispersed and the resin composition can have excellent flame retardancy, impact strength and balance therebetween.

The impact modifier forms a spherical dispersed phase and the dispersed phase may have the same average diameter as that of the impact modifier. For example, the impact modifier may have an average diameter from 0.1 µm to 6 µm, without being limited thereto. Since the impact modifier exhibits excellent dispersibility, the impact modifier can provide excellent impact strength to the resin composition without deterioration in flame retardancy, even when used in a smaller amount than general impact modifiers.

According to the present invention, the thermoplastic resin composition may further include conventional additives, as needed. The additives may include antioxidants, lubricants, nucleating agents, surfactants, coupling agents, fillers, plasticizers, antimicrobials, release agents, heat stabilizers, photostabilizers, compatibilizers, inorganic additives, colorants, stabilizers, antistatic agents, pigments, dyes, flame proofing agents, and the like, without being limited thereto. These may be used alone or in combination thereof.

The additives may be present in an amount of 0.01 parts by weight to 40 parts by weight based on 100 parts by weight of the thermoplastic resin, without being limited thereto.

In one embodiment, the thermoplastic resin composition may have an Izod impact strength from 7 kgf·cm/cm to 20 kgf·cm/cm, for example, from 8 kgf·cm/cm to 13 kgf·cm/cm, as measured on an 1/8" thick specimen in accordance with ASTM D638.

In one embodiment, the thermoplastic resin composition may have a flame retardancy level of V0 or higher, as measured on an 2.5 mm thick specimen according to the UL-94 vertical flammability test method.

In accordance with another embodiment of the present invention, a molded article is formed of the above thermoplastic resin composition. The thermoplastic resin composition according to the present invention may be prepared by a method of preparing a thermoplastic resin composition known in the art. For example, the above components and, optionally, other additives are mixed, followed by melt extrusion in an extruder, thereby preparing a resin composition in the form of pellets. The prepared pellets may be produced into various molded articles (products) through various molding methods, such as injection molding, extrusion, vacuum molding, casting, and the like. Such molding methods are well known to those skilled in the art. Since the molded article exhibits excellent properties in terms of flame retardancy, impact resistance, fluidity and the like, the molded article is useful for automotive components, electronic components, exterior materials and the like, which require these properties.

Hereinafter, the present invention will be described in more detail with reference to some examples. It should be understood that these examples are provided for illustration only and are not to be construed in any way as limiting the present invention.

### EXAMPLES

Details of components used in the following Examples and Comparative Examples are as follows:
(A) Polyarylene ether resin: A polyphenylene ether (PPE) resin (LXR-035C, Blue Star Co., Ltd., weight average molecular weight (Mw): 30,000 g/mol, intrinsic viscosity (IV): 38 dL/g to 41 dL/g) was used.
(B) Aromatic vinyl polymer: A polystyrene (PS) resin (TAIRIREX GP-5000, Formosa Co., Ltd., weight average molecular weight (Mw): 33,000 g/mol, intrinsic viscosity (IV): 40 dL/g) was used.
(C) Flame retardant: Bisphenol-A bis(diphenyl phosphate) (BDP) was used.
(D) Impact modifier
(D1) g-ABS 1: An acrylonitrile-butadiene-styrene graft copolymer (g-ABS), in which 44 wt% of an unsaturated monomer (97 wt% of a styrene monomer and 3 wt% of an acrylonitrile monomer) is grafted to 56 wt% of polybutadiene latex (PBL) having an average particle size of 310 nm, was used.
(D2) g-ABS 2: An acrylonitrile-butadiene-styrene graft copolymer (g-ABS), in which 50 wt% of an unsaturated monomer (83 wt% of a styrene monomer and 17 wt% of an acrylonitrile monomer) is grafted to 50 wt% of polybutadiene latex (PBL) having an average particle size of 250 nm, was used.
(D3) g-ABS 3: An acrylonitrile-butadiene-styrene graft copolymer (g-ABS), in which 44 wt% of an unsaturated monomer (75 wt% of a styrene monomer and 25 wt% of an acrylonitrile monomer) is grafted to 56 wt% of polybutadiene latex (PBL) having an average particle size of 310 nm, was used.

### Example 1 and Comparative Examples 1 to 2

The components were added in amounts as listed in Table 1, followed by melting, kneading and extrusion, thereby preparing pellets. Here, extrusion was performed using a twin-screw extruder having L/D of 32 and a diameter of 45 mm, and a flame retardant was added by side feeding. The prepared pellets were dried at 80°C for 6 hours, followed by injection molding using a 3 oz injection machine at 270°C, thereby preparing a specimen (4 mm × 4 mm × 2.5 mm). The prepared specimen was evaluated as to the following properties. Results are shown in Table 1.

### Evaluation of properties

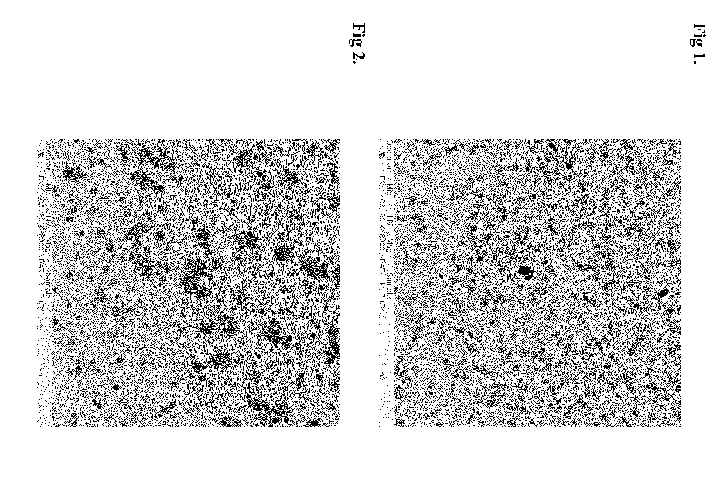

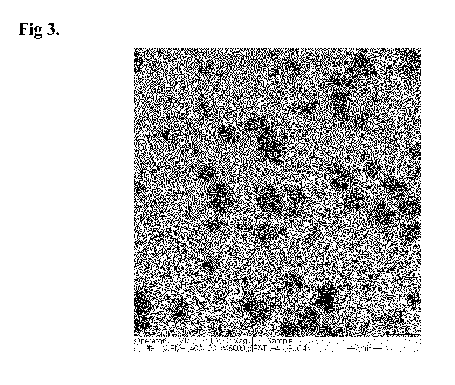

(1) Izod impact strength (unit: kgf·cm/cm): Izod impact strength was measured on a 1/8" thick notched Izod specimen in accordance with ASTM D256.
(2) Flame retardancy: Flame retardancy of the above specimen was measured according to the UL-94 vertical flammability test method.
(3) Dispersibility: A transmission electron microscope (TEM) (TF30, FEI Co., Ltd., magnification: 30 K) image of the specimen was photographed to observe dispersibility of an impact modifier. A TEM image of the specimen of Example 1 is shown in Fig. 1, and TEM images of the specimens of Comparative Examples 1 and 2 are shown in Figs. 2 and 3, respectively.

**Table 1**

| Item | Example 1 | Comparative Example 1 | Comparative Example 2 |
|---|---|---|---|
| (A) (wt%) | 53 | 53 | 53 |
| (B) (wt%) | 47 | 47 | 47 |
| (C) (parts by weight) | 20 | 20 | 20 |
| (D1) (parts by weight) | 15.8 | - | - |
| (D2) (parts by weight) | - | 15.8 | - |
| (D3) (parts by weight) | - | - | 15.8 |
| Izod impact strength (kgf·cm/cm) | 9.5 | 5.1 | 4.6 |
| Flame retardancy level | V0 | V0 | V0 |

| | | | |
|---|---|---|---|
| *Parts by weight: parts by weight based on 100 parts by weight of base resin (A+B) | | | |

From the results of Table 1, it can be seen that the thermoplastic resin composition (Example 1) according to the present invention including the impact modifier ((D1) g-ABS), in which the amount of the unsaturated monomer was adjusted, exhibited excellent impact strength and flame retardancy even though the impact modifier was used in a small amount of 18 parts by weight or less. The reason being that, since the impact modifier was uniformly dispersed (see Fig. 1), excellent impact strength could be imparted to the overall resin composition despite the small amount of the impact modifier.

Conversely, it can be seen that the resin compositions of Comparative Examples 1 and 2 using the conventional impact modifiers, in which the amount of the unsaturated monomer was outside the range according to the present invention, included the impact modifiers not uniformly dispersed therein (see Figs. 2 and 3), and suffered from deterioration in impact strength, flame retardancy, and the like.

It should be understood that various modifications, changes, alterations, and equivalent embodiments can be made by those skilled in the art without departing from the spirit and scope of the invention.

## Claims

1. A thermoplastic resin composition comprising:
a base resin comprising a polyarylene ether resin and an aromatic vinyl polymer;
a flame retardant; and
an impact modifier,
wherein the impact modifier is a rubber-modified vinyl graft copolymer in which an unsaturated monomer comprising 95 wt% to 99 wt% of an aromatic vinyl compound and 1 wt% to 5 wt% of a vinyl cyanide compound is grafted to a rubbery polymer, the base resin and the flame retardant form a continuous phase, and the impact modifier forms a dispersed phase.

2. The thermoplastic resin composition according to claim 1, wherein the base resin comprises 30 wt% to 70 wt% of the polyarylene ether resin and 30 wt% to 70 wt% of the aromatic vinyl polymer.

3. The thermoplastic resin composition according to claim 1 or 2, wherein the flame retardant is present in an amount of 5 parts by weight to 30 parts by weight, and the impact modifier is present in an amount of 12 parts by weight to 18 parts by weight, based on 100 parts by weight of the base resin.

4. The thermoplastic resin composition according to any one of claims 1 to 3, wherein the polyarylene ether resin is a polymer comprising a repeat unit represented by Formula 1: 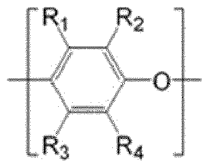 wherein R₁, R₂, R₃ and R₄ are each independently a hydrogen atom, a halogen atom, a C₁ to C₆ alkyl group, or a C₆ to C₁₂ aryl group.

5. The thermoplastic resin composition according to any one of claims 1 to 4, wherein the aromatic vinyl polymer comprises at least one of polystyrene, poly(α-methylstyrene), poly(β-methylstyrene), and polyvinyl naphthalene.

6. The thermoplastic resin composition according to any one of claims 1 to 5, wherein the polyarylene ether resin has a weight average molecular weight from 10,000 g/mol to 200,000 g/mol, and the aromatic vinyl polymer has a weight average molecular weight from 20,000 g/mol to 500,000 g/mol.

7. The thermoplastic resin composition according to any one of claims 1 to 6, wherein the thermoplastic resin composition has an Izod impact strength from 7 kgf·cm/cm to 20 kgf·cm/cm, as measured on an 1/8" thick specimen in accordance with ASTM D638.

8. The thermoplastic resin composition according to any one of claims 1 to 7, wherein the thermoplastic resin composition has a flame retardancy level of V0 or higher, as measured on an 2.5 mm thick specimen according to the UL-94 vertical flammability test method.

9. A molded article formed of the thermoplastic resin composition according to any one of claims 1 to 8.
